Europäisches Patentamt

European Patent Office

Office européen des brevets

(11) Veröffentlichungsnummer: **0 498 234 A1**

## EUROPÄISCHE PATENTANMELDUNG

(21) Anmeldenummer: **92101162.3**

(51) Int. Cl.5: **E05F 15/10**

(22) Anmeldetag: **24.01.92**

(30) Priorität: **08.02.91 DE 4103836**

(43) Veröffentlichungstag der Anmeldung:
**12.08.92 Patentblatt 92/33**

(84) Benannte Vertragsstaaten:
**AT BE CH DE DK ES FR GB GR IT LI LU NL PT SE**

(71) Anmelder: **W.u.H. Neukirchen GmbH & Co. KG
Eichenstrasse 87-103
W-4060 Viersen(DE)**

(72) Erfinder: **Büthe, Michael
Spielhofstrasse 1
W-4060 Viersen 1(DE)**

(74) Vertreter: **Cohausz & Florack Patentanwälte
Postfach 14 01 61 Schumannstrasse 97
W-4000 Düsseldorf 1(DE)**

(54) **Antrieb für einen Öffnungsabschluss mit elektronischer Steuereinrichtung.**

(57) Die Erfindung bezieht sich auf einen Antrieb für einen Öffnungsabschluß A, der über ein Getriebe G von einem Motor M angetrieben ist. Eine Überwachungseinrichtung für die Öffnungs- und Schließbewegung des Öffnungsabschlusses A weist einen Impulsgeber I auf, der eine vom Schließ- und Öffnungsweg des Öffnungsabschlusses A abhängige Impulsfolge liefert. Diese Impulsfolge wird von einer Vergleichseinrichtung sowohl hinsichtlich der Anzahl der Impulse als auch der Impulsfrequenz überprüft. Über die Anzahl der gelieferten Impulse wird der Motor M bei Erreichen der beiden Endstellungen des Öffnungsabschlusses A abgeschaltet. In Abhängigkeit von der Überwachung der Impulsfrequenz erfolgt eine Abschaltung des Motors M zu jeder Zeit während der Schließ- und Öffnungsbewegung, wenn die Schließ- und Öffnungsgeschwindigkeit von der Sollgeschwindigkeit abweicht.

Die Erfindung betriff einen Antrieb für einen einen Öffnungsabschluß, bestehend aus einem den Öffnungsabschluß über ein Getriebe antreibenden Motor und einer Steuereinrichtung für den Motor, die mit einer Überwachungseinrichtung für die Endstellungen des Öffnungsabschlusses in Offen- und Schließstellung und gegebenenfalls für die Schließkante des Öffnungsabschlusses beim Erreichen der geöffneten und geschlossenen Endstellungen den Motor abschaltet, wobei die Überwachungseinrichtung einen Impulsgeber, der Impulse mit einer von der Schließ- und Öffnungsbewegung des Öffnungsabschlusses abhängigen Impulsfolge liefert, einen Impulsempfänger mit einem Impulszähler und einer Auswerteeinrichtung aufweist, die in einer Vergleichsstufe die empfangenen Impulse nach ihrer Anzahl mit einstellbaren, entsprechenden Sollwerten für die Enstellungen des Öffnungsabschlusses vergleicht.

Motorisch angetriebene Öffnungsabschlüsse, wie Schwenktore, Schiebetore und Rolltore weisen eine Steuereinrichtung mit Endschaltern auf, die mechanisch, magnetisch oder optisch entweder unmittelbar vom Öffnungsabschluß selbst oder von einem starr mit dem Antrieb des Öffnungsabschlusses verbundenen Auslöseelement Sensoren bei Erreichen der Endstellungen aktivieren. Die Justierung der Sensoren, insbesondere wenn sie wie üblich in der Box des Getriebes des Antriebes eingebaut sind, ist in der Regel umständlich und zeitaufwendig. Daher ist aus dem deutschen Gebrauchsmuster DE 87 01 165 U1 eine Torsteuerung der eingangs genannten Art bekannt, mit der während der Tormontage Sollwerte für die geöffnete und geschlossene Torstellung aufgenomen werden. Diese Werte werden während der folgenden Betätigungen des Tores mit den durch die Steuerung erfaßten Ist-Werten für den Schwenkweg des Tores verglichen. Die bekannte Steuerung schaltet den Antrieb des Tores ab, wenn der gemessene Ist-Wert mit einem vorgegebenen Sollwert übereinstimmt. Auf diese Weise ermöglicht die bekannte Steuerung ein einfaches Justieren der Torsteuerung. Sie ist aber nicht in der Lage, den Torantrieb auf Überlastung oder Beschädigung zu überwachen.

Der Erfindung liegt die Aufgabe zugrunde, einen Antrieb der eingangs genannten Art zu schaffen, mit dessen Steuereinrichtung es nicht nur möglich ist, die Endstellungen des Öffnungsabschlusses auf einfache Art und Weise einzustellen, sondern die es darüber hinaus ermöglicht, eine Überlastung des Antriebes und eine zu lange Laufzeit zu überwachen und entsprechende Steuervorgänge auszulösen.

Diese Aufgabe wird bei einem Antrieb der eingangs genannten Art dadurch gelöst, daß die Überwachungseinrichtung zusätzlich mit einem an die Auswerteinrichtung angeschlossenen Impulsfrequenzmesser ausgestattet ist und daß die Auswerteinrichtung in einer Vergleichsstufe die Frequenz der empfangenen Impulse mit einem Sollwert für die Schließ- bzw. Öffnungsgeschwindigkeit des Öffnungsabschlusses vergleicht und in Abhängigkeit von dem Ergebnis dieses Vergleichs Steuersignale zum Abschalten des Motors liefert.

Vorzugsweise weisen der Impulsempfänger ein Laufzeitmeßglied für die Dauer der Impulsfolge und die Auswertschaltung eine Vergleichsstufe auf, die in Abhängigkeit von dem Vergleich ein Steuersignal zum Abschalten des Motors liefert.

Durch die Überwachung der Impulse sowohl hinsichtlich ihrer Zahl als auch hinsichtlich ihrer Frequenz läßt sich jederzeit eine Aussage über die Position des Öffnungsabschlusses und seine Schließ- und Öffnungsgeschwindigkeit machen. Liegt die Impulsfolgefrequenz unter dem Sollwert, dann ist die Ursache dafür in der Regel ein Hindernis oder ein Verklemmen des Öffnungsabschlusses, was zu einer Überlastung des Antriebes führen kann. In diesem Fall wird der Motor genau so abgeschaltet, wie wenn der insbesondere als Auf- und Abwärtszähler ausgebildete Impulszähler die eingestellten Werte für die Endstellungen erreicht hat. Die Einstellung dieser Werte ist unproblematisch, da nicht länger die Einstellung an mitlaufenden Teilen im Getriebekasten vorgenommen werden müssen, sondern bei einem Probelauf des Öffnungsabschlusses in die beiden Endstellungen außen an der Steuereinrichtung vorgenommen werden können. Es brauchen dann, wie bei der bekannten Vorrichtung auch, lediglich die Zahlwerte als Sollwerte eingegeben zu werden, die eine Anzeige auf dem Impulszähler in der einen oder anderen Endstellung anzeigt.

Im folgenden wird die Erfindung anhand einer Zeichnung näher erläutert, die schematisch einen Antrieb für einen Öffnungsabschluß mit Steuereinrichtung darstellt.

Ein Öffnungsabschluß, beispielsweise ein auf einer Wickelwelle R aufwickelbares Rolltor A wird von einem Motor M über eine Getriebe G angetrieben. An seiner Schließkante K weist der Öffnungsabschluß A einen Signalgeber auf, der beim Auftreffen der Schließkante K auf ein im Schließweg des Öffnungsabschlusses A liegendes Hindernis ein Signal an einen Signalgeber Si liefert, der ein Abschaltsignal an den Motor M liefert. Der Signalgeber Si ist Teil einer Steuereinrichtung St für den Motor M.

Synchron mit der Wickelwelle R wird über das Getriebe G ein Impulsgeber I angetrieben, der eine wegabhängige Impulsfolge an eine Überwachungseinrichtung liefert. Diese Überwachungseinrichtung besteht aus einem Impulszähler Zi, einem Frequenzmesser Fi und einem Laufzeitglied ti. Der Impulszähler Zi bildet mit einem einstellbaren Impulssollwertgeber Zs eine Vergleichsstufe. Der Frequenzmesser Fi bildet mit einem Frequenzsollwertgeber Fs ebenfalls eine Vergleichsstufe. Schließlich bildet das Laufzeitmeßglied ti mit einem Laufzeitsollwertgeber ts eine Vergleichsstufe. Bei einer Soll-Istwertabweichung liefern die einzelnen Stufen unabhängig voneinander ein Signal an den Signalgeber Si, der ein Abschaltsignal an den Motor M liefert.

Der Impulssollwertgeber Zs ist auf zwei Zahlenwerte für die beiden Endstellungen des Öffnungsabschlusses A einstellbar. Die Einstellung erfolgt bei einem Probelauf, beispielsweise derart, daß der Öffnungsabschluß A in Schließstellung gebracht wird. Für diese Endstellung wird der Sollwert beispielsweise auf den Zahlenwert O eingestellt. Dann wird der Öffnungsabschluß A in die Offenstellung gefahren. Dabei werden die vom Impulsgeber I gelieferten Impulse gezahlt. Die Anzahl der dabei abgegebenen Impulse werden im Sollzählwertgeber Zs als Zählwert für die zweite Endstellung eingegeben. Die Vergleichsstufe kann nun so ausgelegt sein, daß der Impulszähler Zials Aufwärts -Abwärtszähler ausgebildet ist und bei Erreichen der Impulszahl für die Endstellung in Offenstellung ein Signal zum Abschalten des Motors M gibt und in entsprechender Weise bei Erreichen der Schließstellung.

Die aus dem Impulsfrequenzsollwertgeber Fs und Impulsfrequenzmesser Fi bestehende Vergleichsstufe überwacht beim Öffnen und Schließen des Öffnungsabschlusses A unabhängig von der augenblicklichen Stellung die Schließ- bzw. Öffnungsgeschwindigkeit. So wird ein Signal zum Abschalten des Motors M ausgelöst, wenn die Impulsfrequenz unter die Sollfrequenz fällt, was ein typisches Zeichen für eine Überlastung des Antriebes ist.

Die Vergleichsstufe ts, ti für die Überwachung der Laufzeit löst ein Signal zum Abschalten des Motors aus, wenn eine vorgegebene Laufzeit überschritten ist. Dies könnte der Fall sein, wenn die Endstellensteuerung versagt hat.

Die rein elektronisch arbeitende Steuereinrichtung St kann gegen Störungen aufgrund ausfallender Bauelemente durch eine Selbstüberwachung gesichert sein, so daß bei Ausfall eines Bauelementes es nicht möglich ist, den Antriebsmotor M einzuschalten. Damit nicht Fehlimpulse die Steuereinrichtung St beeinflussen, können die Impulse bezüglich der Impulsform und ihres Impuls/Pausenverhältnisses überprüft werden, so daß nur solche Impulse zur Auswertung zugelassen werden, die tatsächlich vom Impulsgeber I stammen.

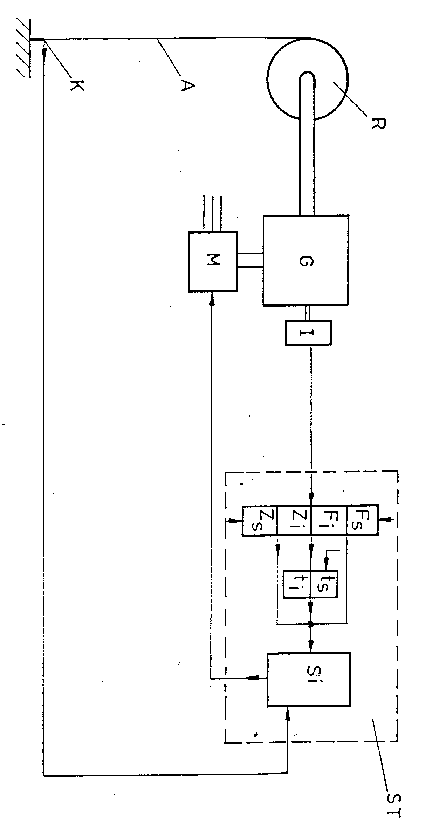

**Patentansprüche**

1. Antrieb für einen Öffnungsabschluß, bestehend aus einem den Öffnungsabschluß (A) über ein Getriebe (G) antreibenden Motor (M) und einer Steuereinrichtung (St) für den Motor (M), die mit einer Überwachungseinrichtung (I, Zi, Zs) für die Endstellungen des Öffnungsabschlusses (A) in Offen- und Schließstellung und gegebenenfalls für die Schließkante (K) des Öffnungsabschlusses (A) beim Erreichen der geöffneten und geschlossenen Endstellungen den Motor (M) abschaltet, wobei die Überwachungseinrichtung einen Impulsgeber (I), der Impulse mit einer von der Schließ- und Öffnungsbewegung des Öffnungsabschlusses (A) abhängigen Impulsfolge liefert, einen Impulsempfänger mit einem Impulszähler (Zi) und einer Auswerteeinrichtung (Zs, Fs) aufweist, die in einer Vergleichsstufe die empfangenen Impulse nach ihrer Anzahl mit einstellbaren, entsprechenden Sollwerten für die Endstellungen des Öffnungsabschlusses (A) vergleicht, **dadurch gekennzeichnet,** daß die Überwachungseinrichtung zusätzlich mit einem an die Auswerteinrichtung (Zs, Fs) angeschlossenen Impulsfrequenzmesser (Fi) ausgestattet ist und daß die Auswerteinrichtung (Zs, Fs) in einer Vergleichsstufe die Frequenz der empfangenen Impulse mit einem Sollwert für die Schließ- bzw. Öffnungsgeschwindigkeit des Öffnungsabschlusses (A) vergleicht und in Abhängigkeit von dem Ergebnis dieses Vergleichs Steuersignale zum Abschalten des Motors (M) liefert.

2. Antrieb nach Anspruch 1, **dadurch gekennzeichnet,** daß der Impulsempfänger ein Laufzeitmeßglied (ti) für die Dauer der Impulsfolge und die Auswertschaltung eine Vergleichsstufe (ts) aufweisen, die in Abhängigkeit von dem Vergleich ein Steuersignal zum Abschalten des Motors (M) liefert.

Europäisches
Patentamt

**EUROPÄISCHER RECHERCHENBERICHT**

Nummer der Anmeldung

EP    92 10 1162

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-2 189 906 (BYRNE AND DAVIDSON DOORS) <br> * Seite 2, Zeile 64 – Seite 3, Zeile 25 * <br> * Seite 3, Zeile 65 – Seite 4, Zeile 4 * <br> * Seite 4, Zeile 28 – Zeile 48 * <br> * Seite 6, Zeile 21 – Zeile 25 * <br> --- | 1,2 | E05F15/10 |
| X <br> Y | WO-A-8 603 249 (KIERKEGAARD) <br> * Seite 4, letzter Absatz – Seite 5, Absatz 2 * <br> * Seite 5, Zeile 27 – Zeile 35 * <br> * Seite 6, letzter Absatz – Seite 7, Absatz 1; Abbildungen 1,2 * <br> --- | 1 <br> 2 | |
| Y <br> A | US-A-4 796 011 (LEMIRANDE ET AL) <br> * Spalte 3, Zeile 22 – Zeile 25 * <br> * Spalte 3, Zeile 61 – Spalte 4, Zeile 9; Abbildung 1 * <br> --- | 2 <br> 1 | |
| A | US-A-4 887 205 (CHOU) <br> * Spalte 4, Zeile 33 – Zeile 37 * <br> * Spalte 6, Zeile 35 – Zeile 40 * <br> * Spalte 7, Zeile 16 – Zeile 19; Abbildung 1 * <br> ----- | 1 | |

**RECHERCHIERTE SACHGEBIETE (Int. Cl.5)**

E05F

Der vorliegende Recherchenbericht wurde für alle Patentansprüche erstellt

| Recherchenort | Abschlußdatum der Recherche | Prüfer |
|---|---|---|
| DEN HAAG | 07 MAI 1992 | VAN KESSEL J. |